# EUROPEAN PATENT SPECIFICATION

(11) **EP 2 749 481 B1**
(45) Date of publication and mention of the grant of the patent: **15.02.2017**
(21) Application number: 12397533.6
(22) Date of filing: 28.12.2012
(51) Int. Cl.: B62D 25/20, B62D 21/09, B62D 27/02, B62D 29/02

(54) **Detachable flooring for a freight transportation chassis and methods for attaching and detaching such**
Abnehmbare Bodenplatten für einen Güterverkehrswagenrahmen und Verfahren zum Befestigen und Entfernen desselben
Plancher démontable pour châssis de transport de fret et procédés permettant de fixer et de détacher un tel plancher

(43) Date of publication of application: 02.07.2014
(73) Proprietor: UPM-Kymmene Wood Oy, 15140 Lahti (FI)
(72) Inventor: Marttila, Pasi, 15540 Villähde (FI); Hannukainen, Jouko, 15240 Lahti (FI); Patovirta, Juha, 15870 Hollola (FI)
(74) Representative: Berggren Oy, Tampere

(56) References cited:
- WO-A1-2011/157897
- DE-A1- 19 748 569

## Description

### Field of the Invention

The application relates to a detachable floor plate for a chassis of a freight transport vehicle or a trailer. Further the application relates to a method for attaching a detachable flooring and a method for detaching a detachable flooring.

### Background

Floorings for freight transport vehicles or trailers are normally made of various floor plates of wood-based material which are fixed at their edges, next to each other or one after the other, to the frame beams of the frame of the freight transport vehicle or trailer. The wood-based floor plates used at present are made of plywood board, or solid wood board coated with a suitable coating, or wood-based composite boards with a plastic coating, for example.

Flooring is currently often fixed by screws. However, this is often found time consuming due to number of screws and drill holes both during attaching and detaching phases. Also, screws penetrate the fixed flooring. Thus screws may have some direct or indirect effect on flooring durability and/or strength, for example.

Publication WO2011/157897 discloses fixing flooring to a frame of a freight transport vehicle or trailer at least partly by means of adhesive instead of screws or other separate fixing means requiring formation of holes.

### Summary

An object of the invention is to provide a flooring system for a chassis of a freight transporting trailer, which flooring system is handy to attach to and detach from a chassis.

An embodiment of the invention comprises a plywood floor plate for a freight transport vehicle comprising a chassis frame. The plywood floor plate comprises veneers attached to each other. The plywood floor plate is attached to the chassis frame with an adhesive joint, wherein the adhesive joint between the chassis frame and the plywood floor plate comprises an adhesive and elastic spacers.

An embodiment of the invention comprises a method for attaching a plywood floor plate for a freight transport vehicle comprising a chassis frame. The plywood floor plate comprises veneers attached to each other. The method comprises placing elastic spacers on the chassis frame, placing an adhesive on a chassis frame, and placing the plywood floor plate on the elastic spacers and the adhesive for attaching the plywood floor plate to the chassis frame.

An embodiment of the invention comprises a method for detaching a plywood floor plate for a freight transport vehicle and a chassis frame for a freight transport vehicle. The plywood floor plate comprises veneers attached to each other. An adhesive joint is between the plywood floor plate and the chassis frame, wherein the adhesive joint comprises elastic spacers and adhesive for keeping attached the plywood floor plate and the chassis frame at a distance from each other. The method for detaching comprises placing means for detaching in the adhesive joint between the plywood floor plate and the chassis frame, and cutting the adhesive joint using means for detaching.

### Description of the Drawings

Some embodiments of the invention are illustrated in more detail by the appended drawings. The accompanied drawings are not in scale.
- Fig. 1: shows a side view of a freight transport vehicle comprising a chassis frame and floor plates according to an embodiment of the invention.
- Fig. 2: shows placement of elastic spacers according to an embodiment.
- Fig. 3: shows placement of elastic spacers according to an embodiment.
- Fig. 4: shows placement of elastic spacers according to an embodiment.
- Fig. 5: shows an example of a frame of a freight transporting trailer according to an embodiment of the invention.
- Fig. 6: shows an example flooring of the freight transporting trailer according to an embodiment of the invention.
- Fig. 7: shows an example flooring of the freight transporting trailer according to an embodiment of the invention.
- Fig. 8: shows an example flooring of the freight transporting trailer according to an embodiment of the invention.
- Fig. 9: shows a method for attaching a floor plate to a chassis frame of the freight transporting trailer according to an embodiment of the invention.
- Fig. 10: shows a method for detaching a floor plate from a chassis frame of the freight transporting trailer according to an embodiment of the invention.
- Fig. 11: shows en embodiment of the invention.

### Detailed Description of the Embodiments

The embodiments are described in further detail referring to the accompanying Figures.

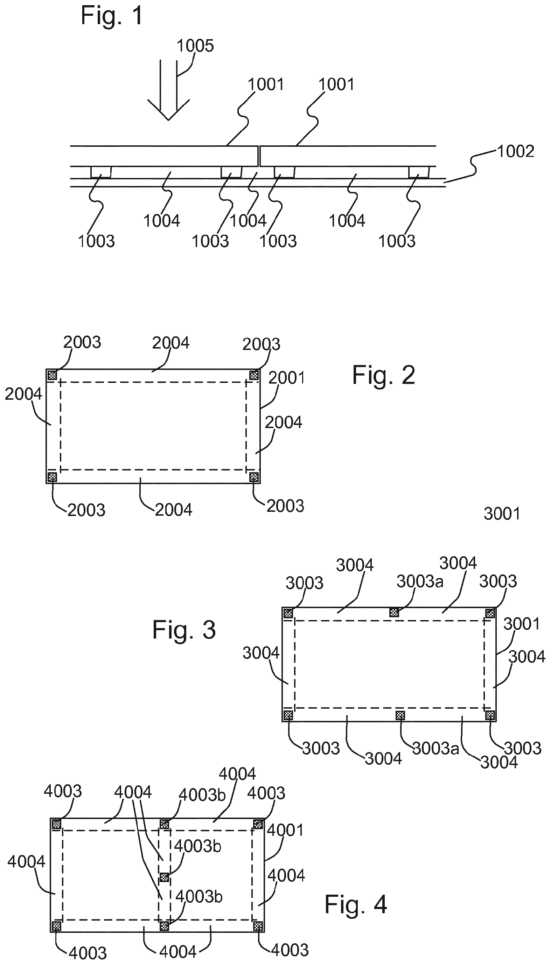

Figure 1 shows a side view of a chassis frame 1002 of a freight transport vehicle and floor plates 1001 according to an embodiment of the invention. A floor plate 1001 is attached to the chassis frame 1002 with an adhesive joint. The adhesive joint comprises an adhesive 1004 and elastic spacers 1003, which are placed between the floor plate 1001 and the chassis frame 1002. The floor plate 1001 is then put on place so that at least its corner parts are facing elastic spacers 1003 of the adhesive joint. The floor plate 1001 is pressed towards the adhesive joint and chassis frame 1002 as shown with arrow 1005 in Figure 1. Pressure 1005 may be supplied during the adhesive bonding. In response to the pressure 1005, at least some of the elastic spacers 1003 may flex slightly. Thickness of at least some elastic spacers 1003 may change so that distance between the chassis frame 1002 and the floor plate 1001 changes accordingly, at least locally. The elastic spacers 1003 comprise relatively hard material. The amount of change of thickness due to elasticity may be only from less than one to few percents of the thickness of the elastic spacer 1003. Generally the adhesive joint comprises a thickness corresponding to a thickness of the elastic spacers. The applied adhesive 1004 is spread evenly on the chassis frame 1002 due to the pressure. Even adhesive 1004 layer forms a steady and stable attachment of the floor plates 1001 to the chassis frame 1002. The attachment is resistant and persists hard use.

According to an embodiment elastic spacers are placed on the chassis frame before applying an adhesive. The elastic spacers may comprise glue on one surface. The elastic spacers may be glued on a chassis frame with stick-on side, before applying the adhesive. Adhesive surfaces of elastic spacers may be implemented using any known glue, adhesive or means for gripping. Elastic spacers are provided with an adhesive surface for holding the elastic spacers on a typically metallic chassis frame during flooring attachment according to embodiments.

In another embodiment elastic spacers are placed on the chassis frame after applying an adhesive on the chassis frame. In this embodiment no glue or other gripping means is necessary on the surface of the elastic spacers. The elastic spacers are placed on the adhesive and attached to their places with the adhesive used for forming the adhesive joint between the floor plate and the chassis frame.

According to an embodiment an elastic spacer comprises one of rubber or soft plastic. In an embodiment elastic spacers comprise two opposing surfaces. The elastic spacers may comprise a square surface comprising a side of 10-15 mm; preferably 10 mm. Elastic spacers may comprise other forms, like rectangular, oblong, rounded corners, oval, or any combination of previous. Elastic spacers may comprise two opposing surfaces of different areas, like one surface of 100-144 mm² and the opposing surface of 120-225 mm². Generally an elastic spacer is smaller than a chassis frame on which it is placed in order to be part of the adhesive joint. Elastic spacer may comprise surface area facing the chassis frame, which is an order of 1/10 of the shorter side of the rectangular chassis frame. Thickness of an elastic spacer between the opposing surfaces is 1.5-5 mm; preferably 2-4 mm; more preferably 2-3.5 mm. An elastic spacer may comprise a hardness of 30-95, or preferably 50-85; or more preferably 60-80 measured according to standard ASTM D2240 type A. The quantity is sometimes called Shore-A. The standard ASTM D2240 measures hardness of softer plastics with scale A, whereas harder plastics are measured according to scale D. Higher values indicate a harder material. Hardness measures elasticity, or ability to temporary change shape in response to pressure, but return to the original shape when pressure is removed. Hardness of an elastic spacer according to an embodiment enables the spacer to be used for maintaining a distance corresponding to elastic spacer thickness between the chassis frame and the floor plate. The elastic spacer has effect of providing good attachment and/or adhesive joint having thickness corresponding to the thickness of the elastic spacer.

Amount of adhesive in the adhesive joint according to embodiments corresponds to thickness of the elastic spacers. The elastic spacers prohibit adhesive from leaking away from the adhesive joint, but the spacers maintain a space for the adhesive between the chassis frame and the floor plate. Thickness of the adhesive joint may be 2-4 mm, for example. According to embodiments amount of adhesive provides strength for the adhesion. Further it protects against cohesive failures. In accordance to at least some embodiments, the adhesive is applied on a frame chassis as a continuous wake. Continuous wake of adhesive provides tight continuous adhesive joint. This has effect of forming a moisture-resistant joint. Further, despite an area allocated by elastic spacers, an amount of adhesive is enough to form a durable joint and good attachment between a frame chassis and a floor plate. In at least some embodiments continuous wake of adhesive is applied on elastic spacers. The applied adhesive covers the elastic spacer on each edge, despite the edge facing the chassis frame. The elastic spacer comprises dimension of small quantity on a chassis frame compared to the corresponding dimension of the applied adhesive wake on the elastic spacer. For example, a chassis frame may comprise width of 10 cm, an elastic spacer may comprise width of 1 cm, and adhesive wake may comprise width of 1-2 cm. Generally, the adhesive wake is left on a chassis frame and remains narrow compared to the chassis frame even after the floor plate has been attached to the chassis frame with the adhesive. If broader adhesive wake is desired, for example for a wider chassis frame, more adhesive may be provided and then expanded on a chassis frame when attaching a floor plate. The floor plate may be put on adhesive and its own weight may expand the adhesive so that thickness of the adhesive layer between the chassis frame and the floor plate corresponds to the thickness of elastic spacers between the chassis frame and the floor plate. The floor plate may be pressed in order to place it on a correct position and level. This may aid expanding adhesive and providing even surface layer of the floor plate.

According to an embodiment a floor plate may comprise plywood board, chipboard, wood fibre board, composite or solid wood board with a coating. A floor plate comprises a planar structure, where two opposing surfaces are at a distance from each other. The surfaces often form a rectangular, or other right-angler oblong structure. The distance between the surfaces may be 5-50 mm, for example, whereas area of the surface is many times larger, for example 1-5 m². A floor plate according to at least some/all example embodiments comprise plywood, which comprises veneers attached to each other. The veneers may be manufactured using die cutting or rotary cutting, for example. Veneers may be attached to each other using phenolic resin. In at least some embodiments a liquid phenolic resin is utilized in order to attach veneers of the plywood. Plywood comprising rotary cut veneers provides strong and stable plywood for a strength floor plate. An unbending floor plate enables less elastic spacers to be utilized during attachment of a floor plate, whereas a bent or weaker floor plate requires more supporting spacers. Plywood comprising veneers provides a rigid structure. This enables use of separate floor plates at a flooring. A continuous flooring is not required. Strength properties of the plywood may be predetermined and adjusted at the desired direction(s). In an embodiment at least one surface of the plywood is coated. Any coating suitable for a plywood is applicable. A coating may be attached using hot-pressing. In an embodiment at least one (upper) surface of the plywood is coated with phenolic resin layer. The opposing surface of the plywood may be structured, or coated with another suitable coating. In an alternative embodiment both surfaces the plywood are coated with a phenolic resin layer. A phenolic resin surface has an effect of providing a good attachment via the adhesive layer.

Adhesive according to embodiments may be any known adhesive capable of forming a stable and sustainable adhesion between a floor plate and a chassis frame. The adhesive may comprise one-component polyurethane adhesive. Polyurethane adhesive has an effect of providing good attachment between the metal frame and to the plywood, as well as between the metal frame and the phenolic resin coating layer of the plywood. The attachment surfaces of the transversal beams and the edge areas of the lower surfaces of the floor plates may be treated with primer prior the application of the adhesive for increasing the adhesive force between these surfaces and the adhesive.

An adhesive joint is formed onto an edge part of one surface of the floor plate comprising two surfaces. An adhesive joint is formed along circumference of the floor plate according to an embodiment. In at least some embodiments, an adhesive joint is further formed onto at least some middle portion of the floor plate surface. The adhesive joint is provided on areas of a floor plate surface, wherein the floor plate surface is facing the chassis frame. In one example, an adhesive joint of a rectangular floor plate comprises corner spacers placed close to corners of the rectangular floor plate and middle spacers placed in the middle of the corner spacers along longitudinal sides of the rectangular floor plate.

Figure 2 shows placement of elastic spacers according to an embodiment. In this embodiment the elastic spacers 2003 are placed on a chassis frame so that they are facing the floor plate 2001 on proximity of corners of the floor plate 2001. The floor plate 2001 is placed on top of the elastic spacers 2003. An adhesive 2004 is placed on a chassis frame facing edge parts of the floor plate. Adhesive 2004 forms a continuous wake, which is wider than width of an elastic spacer 2003 as shown in Figure 2. Similarly, Figure 3 shows placement of elastic spacers according to an embodiment. In this embodiment the elastic spacers 3003 are on corners of the floor plate 3001. It is possible that the elastic spacers 2002 on the edge area of the floor plate support the floor plate 3001 as well as the floor plate(s) adjacent to the floor plate 3001, next to the shorter edge of the rectangular floor plate 3001 of Figure 3. Additionally longitudinal side edges of the floor plate 3001 are facing elastic spacers 3003a. Elastic spacers 3003, 3003a may be placed according to some determined distance between the elastic spacers in this example. The distance between the elastic spacers may be less than 30 cm; or less than 20 cm; or more than 1 meter, for example. Frequency of the elastic spacers is dependent on the used floor plate and its quality, for example. If a floor plate is warped or distorted, more elastic spacers may be employed in order to achieve a homogenous adhesive joint comprising static thickness and/or reliable adhering. In an embodiment an adhesive joint along a chassis frame comprises three elastic spacer per meter. In other example, an adhesive joint along a chassis comprises two elastic spacers per meter. An adhesive 3004 is shown between the elastic spacers 3003. In at least some embodiments, the adhesive 3004 forms a continuous wake along a chassis frame facing a floor plate. Thus the adhesive 3004 may occur between the elastic spacers 3003 as well as on and/or around the elastic spacers 3003.

Figure 4 shows placement of elastic spacers according to an embodiment. In this embodiment the elastic spacers 4003 are on corners of the floor plate 4001. Additionally elastic spacers form a line 4003b, which is parallel to the transversal end edges of the floor plate 4001. The elastic spacers 4003b are placed in the middle of the longitudinal side edges of the floor plate 4001, and close to a mean point of the floor plate 4001. Adhesive 4004 is shown between the elastic spacers 4003. Adhesive 4004 may exist also on and/or around the elastic spacers.

An adhesive joint may comprise more elastic spacers along longitudinal edges of a floor plate than along transversal edges of the floor plate. In an embodiment elastic spacers are placed along the chassis frame at a proximity to end edges of the floor plate. In an embodiment, an elastic spacer may face two edges of adjacent floor plates forming part of the flooring.

Number of elastic spacer may depend on the used floor plate, its dimensions, material, elasticity, quality, hardness and/or density, for example. A wide dimension of a floor plate may require more elastic spacers along it compared to small dimensions of a floor plate. A wide dimension may have tendency to curl. Materials and coatings have also effect on misalignments, expansion by heat and shrinkage, for example.

An adhesive joint between a floor plate and a chassis frame according to embodiments may enable using different floor plates. Floor plates need not be of uniform quality. For example, floor plates may comprise warps. Before attachment to a chassis according to embodiments, a floor plate may form a structure of U- or J-form, where the floor plate may comprise bent structure so that two opposing end edge portions are at a different level(s) than the mid portion of the floor plate. Alternatively, a floor plate may form a cup like structure, where edge and/or corner portions are on different level(s) than the middle portion of the floor plate. A floor plate may have different kind of bent structure, where the surface of the floor plate is not smooth or at the same level, but some evenness occurs. According to embodiment, different kind of floor plates may be utilized. Although a polyurethane does not require pressing in order to attach, in at least some embodiments the floor plate is pressed towards the adhesive joint. The adhesive joint comprises certain thickness despite the external press due to the adhesive and the elastic spacers. Further the adhesive joint has certain thickness. Thus it is possible to press the floor plates towards the flexible adhesive joint in order to achieve continuous and durable adhesion along the adhesive joint. Further it is possible to utilize floor plates of non-uniform quality and still achieve a required quality for the end product. Amount of adhesive in the adhesive joint enables durable adhesion even for uneven floor plates. For example, a floor plate has a rise in the middle, while end edges are facing adhesive joint. If amount of adhesive is modest, pressing a bent floor plate may also result in pressing most of the adhesive away from edge portions. In this case the edge portions may be left with too modest amount, if any adhesive. Thus end edge portions of the floor plate may be left unattached. Whereas with the embodiments, the spacers have effect of controlling the thickness of adhesive joint between them. Spacers have certain flexibility, but those still maintain some thickness. The spacers give stability to the thickness of the adhesive joint. The floor plate is not in touch with the chassis frame. The adhesive joint thus always comprises certain amount of adhesive between two elastic spacers for durable adhesion. Thus an even, continuous and durable adhesion is achieved with the adhesive joint according to embodiments.

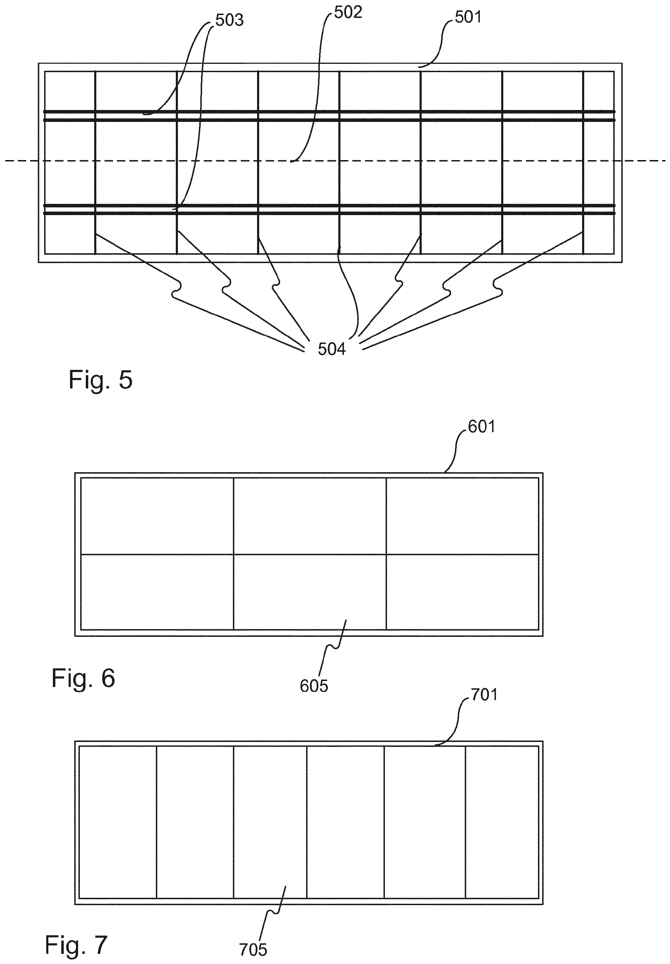

Figure 5 shows an example of a chassis frame of a freight transporting trailer according to an embodiment of the invention. The chassis frame comprises an edge profile 501, wherein vertical side walls of the trailer can be attached. The chassis frame comprises pair of longitudinal beams 503 and plurality of transversal beams 504. The transversal beams 504 are also called intermediate beams. The transversal beams 504 are attached perpendicularly to the longitudinal beams 503. The transversal beams 504 are within a certain distance from each other. The longitudinal beams 503 are situated to both sides of the longitudinal central line 502 of the trailer. The longitudinal beams are situated approximately halfway between the central line 502 and side edge profiles 501 parallel to the central line 502.

Profile of the transversal beams 504 vary. Also placement of the transversal beams 504 in relation to the edge profile 501 may vary in different frame structures. A transversal beam 504 may comprise I-profile. A transversal beam 504 may comprise U-profile with additional arms extending horizontally from the ends of the vertical branches of the U-profiles. According to another example, the transversal beam comprises a Z- profile. In yet another example, the profile of the transversal beam is formed of two Z-profiles being placed next to each other so that the upper vertical arms of the Z-profiles are connected together by means of an suitable connecting element. Any of the described transversal beams may be fixed to longitudinal frame beams 503 by welding them to the side surfaces of the vertical web plates of the longitudinal frame beams 503. The type of transversal beam used in certain location depends on the other constructional elements of the frame around that location. In some embodiments, the transversal beams 503 form a part of a flat surface for facing the flooring comprising floor plates.

The chassis frame in this application may be a frame, a chassis, a pallet, a platform or a stand, for example. The chassis frame may comprise metal beams. The chassis frame is used as a support during transporting freight or cargo. In this application a freight transport vehicle refers to a vehicle intended for the transportation of various bulk freight of solid material, for example a truck, a semi-trailer with a bolster-type truck, a full trailer hauled by a truck, a delivery van or pickup, or another similar vehicle or articulated vehicle which is known as such and moving on rubber-tired wheels, the vehicle and/or the trailer comprising a particular load space or body that is intended solely for the transportation of various freight or bulk freight of said kind. The term freight transport vehicle or trailer also covers such trains and cars moving on rails that are only intended for the transportations of freight and above-mentioned bulk freight. Furthermore, the term freight transport vehicle or trailer also covers, for example, various trailers to be hauled by a car, a van, a tractor, or a dune buggy. However, cars, tractors or dune buggies as such cannot be regarded as freight transport vehicles intended in this application.

According to an embodiment a transport chassis frame of a freight transport vehicle is provided. The chassis frame comprises an edge frame structure, which is forming the upmost surface level of the transport chassis. If edge or border portion of a floor plate surface is at a higher level (vertically) than the edge frame structure of the chassis frame, either the floor plate edge or border gets broken or the transportable goods/packages are violated due to uneven surface. The chassis frame comprises frame beams, and the floor plates are attached to the frame beams of the chassis frame with an adhesive joint. Adhesive shall be capable of adhering a metal frame and the floor plate tightly in order to sustain use, packing, transport, load, unpacking, and so on. Typically industrial trucks are used to load and unload items onto chassis frame floor plates. The adhesive joint between the flooring plates and frame beams comprises an adhesive and elastic spacers. The surface of the transport chassis comprises the flooring plates and the edge frame structure. In at least some of the embodiments, difference in thickness of the chassis edge frame structure and longitudinal/transversal beams corresponds to the thickness of elastic spacers combined with a thickness of a floor plate. The chassis edge frame structure forms the upmost surface level, either equal with or upper than the surface made of the attached floor plates. In practice, chassis frame structures may comprise edge frame structure and frame beams having difference in levels of their upper surfaces less than required according to used elastic spacers and floor plates. In this case, it is possible to rise the edge frame of the chassis frame, and/or lower the frame beams in order to provide the desired difference in level. The exact difference in level depends on used spacers and floor plates.

Figure 6 shows an example flooring of the freight transporting trailer according to an embodiment of the invention. The freight transporting trailer frame may be like the one described with Figure 5. Flooring of Figure 6 comprises plurality of floor plates 605. The floor plates 605 are attached one after another between the longitudinal beams 503 and transversal beams 504 of the frame of Figure 1. The floor plates 605 have rectangular form. Longitudinal edges of the rectangular floor plates 205 are against the longitudinal frame beams 503 and the longitudinal edge profile 501 of the frame. The transversal edge of the rectangular floor plates 605 is facing transversal edge of an adjacent floor plate. At the end portions of the frame, the transversal edge of the rectangular floor plate 605 is facing transversal edge profile 501 of the frame.

Figure 7 shows an example flooring of the freight transporting trailer according to an embodiment of the invention. The freight transporting trailer frame may be like the one described with Figure 5. Flooring of Figure 7 comprises plurality of rectangular floor plates 705. The floor plates 705 are attached next to each other so that longitudinal edge of the rectangular floor plates is facing a longitudinal edge of an adjacent floor plate. The longitudinal (longer) edge of the endmost rectangular floor plates 705 is facing the transversal (shorter) profile of the rectangular frame 501. The transversal (shorter) edges of the rectangular floor plates 705 are facing the longitudinal (longer) edge profile of the rectangular frame 501.

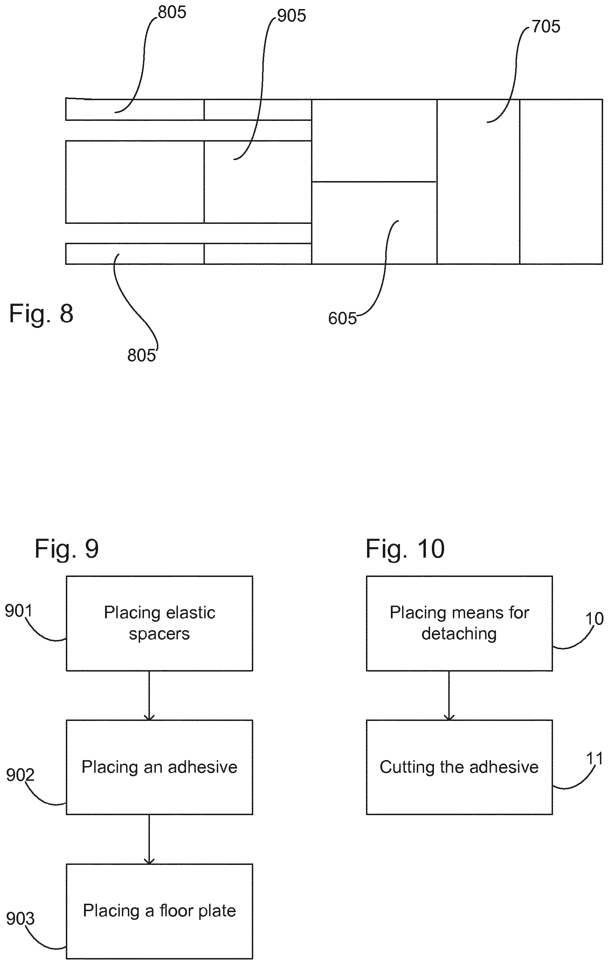

Figure 8 shows an example flooring of the freight transporting trailer according to an embodiment of the invention. Figure 8 comprises floor plates 705 oriented transversally in relation to the frame profile, as described with Figure 7. Figure 8 comprises floor plates 605 oriented longitudinally in relation to the frame profile, as described with Figure 6. Figure 8 comprises longitudinally elongated floor plates 705 between the longitudinal frame beams of the frame (503 in Figure 5). Figure 8 comprises floor plates 805 between the longitudinal edges of the frame profile (501 in Figure 5) and longitudinal frame beams (503 in Figure 5). Floor plates 905 are wider than floor plates 805.

The floor plates 605, 705, 805, 905 have been bonded to the transversal beams (504 in Figure 5). The floor plates 605 and 705 have been additionally bonded to longitudinal frame beams (503 in Figure 6). An embodiment may comprise different kind of flooring elements, as shown in Figure 8, one kind of flooring elements, as shown in Figures 6 or 7, or any mixture of these. For usability upper surface of flooring elements shall be at the same level, in other words flooring elements shall form a flat surface. In a side view an upward construction of Figures 6-8 shall have on the flooring surface as little as possible, if any, difference of height, level difference or unevenness at the surface. As is seen in Figures 6 and 7, the edge profile 501 of the frame is advantageously at the same level with the flooring.

The floor plates 605 are attached on the upper face side of the transversal beams 504. Adhesive joint is supplied onto the upper surface of the transversal beams 504 in order to attach the floor plate 605 onto the transversal beam.

According to an embodiment a method for attaching a floor plate for a freight transport vehicle comprises placing elastic spacers on the chassis frame 901. The method comprises placing the elastic spacers at a certain distance from each other. In one embodiment, the method comprises placing the elastic spacers on proximity of corner areas of a floor plate. The method further comprises placing an adhesive on a chassis frame 902. It is possible to change order of placing the elastic spacers 901 and placing the adhesive 902. The method may comprise placing the elastic spacers after placing the adhesive on the chassis frame; or placing the elastic spacers comprising glue on one surface such that the surface with the glue is facing the chassis frame, before placing adhesive on the chassis frame. The method may comprise placing adhesive as a continuous wake on the chassis frame. Adhesive may be placed on the elastic spacers and/or between the elastic spacers on the chassis frame. The adhesive may form relatively straight line on and between the elastic spacers. Alternatively adhesive may comprise form of a wave or a zigzag in order to provide more adhesive on a chassis frame area, for example. Thickness of the adhesive is more than or equal to the thickness of the elastic spacers.

The method of Figure 9 comprises placing a floor plate on the elastic spacers and the adhesive 903. The method may enable moving the floor plate in order to adjust it to a correct position. The method comprises attaching the floor plate to a chassis frame with an adhesive joint comprising the elastic spacers and an adhesive. In some embodiments, method comprises further pressing the floor plate towards the floor plate and the adhesive for evenly attaching the floor plate to a chassis frame. The method may comprise pressing the floor plate against the chassis frame. During pressing the adhesive is distributed between the elastic spacers. The method comprises providing thickness of adhesive between the floor plate and the chassis frame corresponding to the thickness of the elastic spacers. The method may comprise placing elastic spacers on the chassis frame at a distance corresponding to dimension of the floor plate to be placed onto the chassis frame. The method may comprise placing elastic spacers on the chassis frame at points facing an end edge parts of the floor plate; and/or at points facing corner parts of the floor plate, and/or at points facing edge parts of the floor plate, such that the elastic spacers are placed along the chassis frame.

Before assembling the floor plates according to embodiments, at first, the chassis frame may be cleaned with the help of suitable washing detergent (e.g. with the help of solvent based cleaning detergent and pressurized water). Preferably at least the upper surfaces of the intermediate beams being the attachment surfaces for the floor plates. Aim is to remove dirt and/or fattiness from these surfaces. If any water has been used, the frame must be dried prior placing and/or bonding of the floor plates. However, any cleaning may not be necessary if the attachment surfaces are already free from dirt after the previous manufacturing stages.

When suitable preprocessing for ensuring appropriate cleanliness has been performed, the upper surfaces of the frame beams and those edge parts of the lower surfaces of the floor plates becoming against the upper surfaces of the frame beams may be treated with a primer. This is done for ensuring the appropriate adhesion of the adhesive used for attachment of the floor plates. For example parts made of aluminum are pretreated before attaching floor plates onto the parts. After drainage of the primer, elastic spacers may be placed and/or attached onto the frame beams at a certain intervals corresponding to dimensions of the floor plates, for example. A suitable amount of adhesive is spread to bonding areas, between the elastic spacers. The placement of self-adhering spacers may also be done, while the chassis frame is at a upright position during the attachment stage. Alternatively, while a chassis frame is at horizontal position during the attachment stage, the adhesive may be spread onto the upper surfaces of the frame beams and/or to edge parts of the lower side of the floor plates, before placing the elastic spacers. This can be carried out manually by using suitable extrusion equipment or automatically e.g. in an production line equipped with robot arms for spreading the adhesive and/or placing spacers. Amount of adhesive is suitable for forming a layer having thickness of elastic spacers between the frame beams and the floor plates. This has to be taken in to account when determining the position of the upper surfaces of the frame beams. After the placing and spreading phases, the floor plates are placed one after another on to the frame beams such that for those floor plates, which are being between the longitudinal frame beams, the longitudinal edges are against inner edges of flanges of the longitudinal frame beams. For those floor plates being between the edge profiles and the frame beams, the inner longitudinal edges are against outer edges of flanges of the longitudinal frame beams and the outer longitudinal edges are against the inner side of the edge profiles. The transversal edges of the floor plates, except the front edges of the foremost row at front part of the frame and the rear edges of the rearmost row of floor plates at the rear part of the frame, are against each other. In this case the connection planes formed by two adjacent transversal sides of the floor plates are coplanar with the longitudinal center lines of the transversal beams being between the longitudinal frame beams and the side edge profiles. The front edges of the foremost row of the floor plates at front part of the frame are against the inner side of the transversal edge profile and the rear edges of the rearmost row of floor plates at the rear part of a trailer are against the inner side edges of the transversal edge profile, similarly as the longitudinal edges of the outer floor plates are against the inner side edges of the longitudinal side edge profiles.

For ensuring the tightness of the flooring, some adhesive may be provided between the transversal edges of the adjacent floor plates, between the inner longitudinal edges of the floor plates, the outer side edges of the longitudinal frame beams, between the outer edges of the floor plates (i.e. those forming the side portions of the flooring) and/or the inner sides of the edge profiles.

During the curing of the adhesive, the floor plates may be pressed against the adhesive joint and attachment surfaces of the frame beams. This may be desired in order to enable surfaces being bonded together appropriately against each other. Further, pressing may enable adhesive to be spread evenly between and/or around the elastic spacers. Pressing can be carried out in various ways. There might be, for instance, suitable loading objects being placed on to the floor plates. There might be provided one loading object for each floor plate, or there might be some, or only one load that is laid on to the whole flooring. If common loading object for two or more floor plates is used there might be provided some elastic material between the loading object and the floor plates for ensuring that the load of the loading object distributes as evenly as possible to all floor plates, which are being pressed. Alternatively, pressing might be carried out mechanically by pressing the floor plates against the attachment surfaces of the frame beams 7 with the help of hand-screw presses, adjustable clamps or hydraulically or pneumatically actuated pressing device or devices. Also when this kind of pressing is used, the even distribution of the load can be ensured by similar or corresponding means as described above.

Since adequate curing of the adhesive has took place the loading objects or in case of mechanical pressing the pressing devices (if used) are removed after which the assembly of the flooring is complete. In some cases, it is desired to include some additional securing elements such as rivets, screws or bolts to the most critical places, for example to the corners of the floor plates. This may be desired, when the trailer is used for transporting such goods that may be very demanding in respect of the strength and durability of the flooring. For instance, in case when the trailer is used for transporting very heavy loads or objects being secured to the flooring with such attachment belts that are attached directly to the flooring, additional securing elements might be desired. The additional securing elements can be assembled preferably after the floor plates have been placed on the frame beams prior to pressing and curing stage. Although some screws might be needed for ensuring the strength and durability of the flooring in some quite unusual cases is the amount material and work needed in those cases still minimal when compared it to the amount of work and material used in assembly of such prior art floorings which is secured to the frame beams of a trailer by means of screws or bolts only. Edge parts of the floor plates next to external rectangular chassis frame may be sealed separately, for example after the floor plates have been attached.

The flooring according to embodiments might be formed also differently as described in the above described embodiments. For instance, the attachment surfaces of floor plates can be, instead of the lower edge surfaces, the side surfaces of floor plates. In that case, the frame beams might be formed from profiles having vertical connection surfaces that can be used as the attachment surfaces of the floor plates. In some applications, it is also possible to use tongue-and-groove joints for connecting adjacent floor plates to each other. Further in some embodiments the sides of the floor plates can be cut out so that their shape conforms the shape of the sides of the beams to which they are bonded. Therefore there could be preferably such shapes in the beams that restrain the floor plates at least in one direction. This direction might be advantageously chosen such that it is the direction being the most critical direction in point of view of the strength of the adhesive i.e. it prevents more preferably tensile loads than those causing shearing forces to the adhesive attachments between the floor plates and the frame.

According to an embodiment there is provided a method for detaching a floor plate and a chassis frame of a freight transport vehicle. This embodiment is illustrated in Figure 10. There is an adhesive joint between the floor plate and the chassis frame, and the adhesive joint comprises elastic spacers for keeping attached the floor plate and the chassis frame at a certain distance from each other. The method comprises placing means for detaching 10 in the adhesive joint between the floor plate and the chassis frame, and cutting the adhesive joint 11 using means for detaching. Means for detaching 10 may comprise a wire, a cutting wire, a piano wire, an oscillation tool, or other suitable tool. Means for detaching may comprise cutting edge of less than 3 mm; preferably less than 2 mm, or less than 1 mm. For example a blade of an oscillation tool may comprise a cutting edge of a blade of less than 2 mm. A wire of a detaching means may comprise diameter of less than 2 mm; or less than 1 mm. Before placing means for detaching, it is possible to make a space in the adhesive joint for the means for detaching. This may be implemented by cutting, drilling, milling or sawing. The elastic spacers according to embodiments provide a gap between the attached chassis frame and the floor plate. The gap comprises adhesive joint. The chassis frame and the floor plate are not in touch. During the detaching, the placed detaching means are used for cutting the adhesive joint 11. For example a wire is pulled through the adhesive joint. The adhesive joint comprises adhesive and elastic spacers. For example adhesive comprising polyurethane and elastic spacers may be cut in similar manner using similar means. The means for detaching slice the adhesive joint. The adhesive joint may be cut into two parts so that it remains partly at surface of a frame beam, and partly at a surface of a floor plate. Thus the adhesive joint layer between the frame beam and a floor plate is cut. Typically elastic spacers of the adhesive joint are also cut. With a little amount of adhesive, for example a layer having thickness of 1 mm, it is not possible to cut the adhesive layer, but it is preferably removed using other methods and means. In at least some embodiments, only adhesive remains on the chassis frame after a floor plate has been detached. Advantageously no wood-material or coating of the floor plate exists at the chassis frame after detachment.

Elastic spacers and an adhesive according to embodiments make it easy, fast and handy to detach the floor plates from the chassis frame. The adhesive joint comprising elastic spacers and adhesive is cuttable. This is especially usable when period of exchange is dense. Some trailers are made for back loaded use, for example. In such trailers the rearmost floor plates will wear the most during use. Thus the rearmost floor plates require periodical changing. The exchange is fast and easy according to the embodiments.

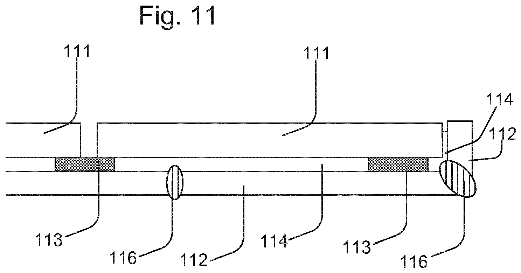

Figure 11 shows an embodiment of the invention. A chassis frame 112 in this embodiment has been welded. Typically some welding points exist at a metallic chassis frame 112. Welding points 116 typically comprise some unevenness of the surface around coupling. For example, welding point 116 may be seen as a rough area at a butt. Previously, when a floor plate 111 was placed to be attached on a chassis frame 112, the floor plate 111 was adjusted to compensate unevenness of the chassis frame 112. In practice floor plate was slit to form a cut-out facing the butt joint. If this was not done, the floor plate would carry the weight against the butt joint. This may cause violation to the surface of the floor plate facing the butt joint. With the elastic spacers 113 and adhesive 114 according to embodiments, compensation or cutting of the floor plate is no longer necessary. The adhesive 114 may exist along the chassis frame and between the rectangular edge parts of the chassis frame 112 and the floor plate 111. The elastic spacers 113 enable the needed compensation with the thickness of the adhesive joint. Thickness of the adhesive is thicker than or equal to the thickness of the elastic spacer, when the adhesive is applied, before the adhering phase. No hard parts are adjusted, but the amount of adhesive may vary according to the space and thickness at the butt joint area 116. Elastic spacers 113 do not violate the floor plate 111. An elastic spacer 113 may support two separate floor plates 111 at their edge area, as shown in Figure 11.

The amount of the floor plates used for forming a flooring may vary. The flooring may be comprise as many floor plates as there are open spaces between the longitudinal frame beams and transversal frame beams. In another embodiments one floor plate might cover two or more that kind of open spaces. The floor plates can be formed of plywood. Also other materials are possible, such as wood-based plate materials, for example composite or solid wood board. These floor plate materials may be coated with some suitable hard and durable material layers which can be phenolic resin layer or some other resin or plastic having corresponding durability and mechanical properties. The floor plate may have similar coating on both surfaces. Alternatively, upper surface of the floor plate, which forms the surface for the flooring, comprises another kind of coating, or is structured, for example according to wire or track. Lower surface of the floor plate, which is facing the adhesive joint, may be coated, for example with phenolic film.

Elastic spacers and polyurethane comprise similar inherent strength properties. The adhesive joint comprising adhesive and elastic spacers having similar inherent properties is handy to cut due to the similar properties during cutting the adhesive joint.

An effect of elastic spacers comprises maintaining space or thickness between a chassis frame and a floor plate before the adhesive is cured or put on an adhesive state. An elastic spacer is tight part of an adhesive joint, whereby an water tight joint is formed. An elastic spacer may be surrounded by adhesive in an adhesive joint. An elastic spacer may be surrounded by adhesive at least on most edges and faces, despite a face of an elastic spacer facing a chassis frame, which may lack adhesive on it. An effect of an adhesive is to adhere a chassis frame and a floor plate to each other. An effect of a continuous adhesive wake is to provide a strength, tight adhesion between a metallic chassis frame and a floor plate, which may comprise plywood, coating, phenolic resin, or other suitable material on its surface facing the adhesive. Another effect of a continuous adhesive wake between a chassis frame and a floor plate is to provide handy, fast and easy way to detach a floor plate from a chassis frame.

The adhesive used for bonding the floor plates might be instead of one-component polyurethane adhesive for example some two-component type adhesive such as epoxy adhesive or two-component polyurethane adhesive. According to at least some embodiments, the used adhesive is such that new adhesive sticks to older one. Even if some adhesive is left on a chassis frame during detachment, new adhesive can be applied onto it. The used adhesive forms a base for a new adhesive forming an adhesive joint between a chassis frame and a floor plate.

Many other constructional parts and details of the flooring according to the embodiments, as well as method for forming such flooring can be carried out in ways differing from the above described examples, but being within the scope of the invention defined hereafter in the claims.

## Claims

1. A plywood floor plate for a freight transport vehicle comprising a chassis frame, wherein the plywood floor plate (1001) comprises veneers attached to each other, and the plywood floor plate (1001) is attached to the chassis frame (1002) with an adhesive joint, **characterized in that** the adhesive joint between the plywood floor plate (1001) and the chassis frame (1002) comprises an adhesive (1004) and elastic spacers (1003).

2. A plywood floor plate for a freight transport vehicle according to claim 1, **characterized in that** the adhesive joint comprises a thickness corresponding to a thickness of the elastic spacers.

3. A plywood floor plate for a freight transport vehicle according to any of claims 1-2, **characterized in that** the elastic spacers (1003) comprise two opposing surfaces and between the opposing surfaces a thickness of 1.5-5 mm; preferably 2-4 mm; more preferably 2-3.5 mm.

4. A plywood floor plate for a freight transport vehicle according to any of claims 1-3, **characterized in that** the elastic spacers (1003) comprise hardness of 60-80 measured according to Shore-A of standard ASTM D2240 type A.

5. A plywood floor plate for a freight transport vehicle according to any or claims 1-4, **characterized in that** the adhesive (1004) comprises polyurethane.

6. A plywood floor plate for a freight transport vehicle according to any of claims 1-5, **characterized in that** the elastic spacers (1003) comprise two opposing surfaces, wherein one of the surfaces comprises a glue.

7. A plywood floor plate for a freight transport vehicle according to any of claims 1-6, **characterized in that** the plywood floor plate (1001) comprises a wood-base and a coating, optionally the coating comprising phenolic resin.

8. A plywood floor plate for a freight transport vehicle according to any of claims 1-7, **characterized in that** the chassis frame (1002) comprises metallic frame beams fastened to each other.

9. A plywood floor plate for a freight transport vehicle according to any of claims 1-8, **characterized in that** the adhesive joint is formed onto an edge part of one surface of the plywood floor plate (1001) comprising two surfaces.

10. A plywood floor plate for a freight transport vehicle according to any or claims 1-9, **characterized in that** the adhesive joint is formed onto a chassis frame (1002) at a location, where the chassis frame (1002) is facing an edge part of one surface of the plywood floor plate (1001) comprising two surfaces; and where the chassis frame (1002) is facing a middle part of the one surface of the plywood floor plate (1001) comprising two surfaces.

11. A method for attaching a plywood floor plate for a freight transport vehicle comprising a chassis frame, the method comprising
- providing a plywood floor plate comprising veneers attached to each other;
- placing an adhesive on the chassis frame (902);
**characterized in that** the method further comprises
- placing elastic spacers on the chassis frame (901);
- placing the plywood floor plate on the elastic spacers and on the adhesive for attaching the plywood floor plate to the chassis frame (903).

12. A method according to claim 11, **characterized in that** the method comprises placing elastic spacers on the chassis frame (901) at least to locations facing corner parts of the plywood floor plate to be placed onto the chassis frame.

13. A method according to any of claims 11-12, **characterized in that** the the method comprises placing adhesive (902) between the elastic spacers on the chassis frame.

14. A method according to any of claims 11-13, **characterized in that** the method comprises placing the elastic spacers (901) comprising glue on one surface such that the surface with the glue is facing the chassis frame, before placing adhesive on the chassis frame (902).

15. A method according to any of claims 11-14, **characterized in that** the method comprises providing thickness of adhesive between the plywood floor plate and the chassis frame corresponding to the thickness of the elastic spacers.

16. Method for detaching a plywood floor plate for a freight transport vehicle and a chassis frame for a freight transport vehicle, wherein the plywood floor plate comprises veneers attached to each other, and an adhesive joint is between the plywood floor plate and the chassis frame, **characterized in that** the adhesive joint comprises an adhesive and elastic spacers for keeping the attached plywood floor plate and the chassis frame at a distance from each other, and the method for detaching comprises
- placing means for detaching in the adhesive joint between the plywood floor plate and the chassis frame (10), and
- cutting the adhesive joint using means for detaching (11).

17. Method according to claim 16, **characterized in that** the means for detaching comprise a cutting edge of less than 3 mm; or preferably less than 2 mm; or more preferably less than 1 mm.

## Patentansprüche

1. Sperrholzbodenplatte für ein Frachttransportfahrzeug, aufweisend einen Fahrgestellrahmen, wobei die Sperrholzbodenplatte (1001) aneinander angebrachte Furniere aufweist und die Sperrholzbodenplatte (1001) mit einer Klebstoffverbindung an dem Fahrgestellrahmen (1002) angebracht ist, **dadurch gekennzeichnet, dass** die Klebstoffverbindung zwischen der Sperrholzbodenplatte (1001) und dem Fahrgestellrahmen (1002) einen Klebstoff (1004) und elastische Abstandhalter (1003) aufweist.

2. Sperrholzbodenplatte für ein Frachttransportfahrzeug nach Anspruch 1, **dadurch gekennzeichnet, dass** die Klebstoffverbindung eine Dicke entsprechend einer Dicke der elastischen Abstandhalter aufweist.

3. Sperrholzbodenplatte für ein Frachttransportfahrzeug nach einem der Ansprüche 1 bis 2, **dadurch gekennzeichnet, dass** die elastischen Abstandhalter (1003) zwei gegenüberliegende Oberflächen und zwischen den gegenüberliegenden Oberflächen eine Dicke von 1,5 bis 5 mm, vorzugsweise 2 bis 4 mm, mehr bevorzugt 2 bis 3,5 mm aufweisen.

4. Sperrholzbodenplatte für ein Frachttransportfahrzeug nach einem der Ansprüche 1 bis 3, **dadurch gekennzeichnet, dass** die elastischen Abstandhalter (1003) eine Härte von 60 bis 80, gemessen nach Shore-A des Standards ASTM D2240 Typ A, aufweisen.

5. Sperrholzbodenplatte für ein Frachttransportfahrzeug nach einem der Ansprüche 1 bis 4, **dadurch gekennzeichnet, dass** der Klebstoff (1004) Polyurethan aufweist.

6. Sperrholzbodenplatte für ein Frachttransportfahrzeug nach einem der Ansprüche 1 bis 5, **dadurch gekennzeichnet, dass** die elastischen Abstandhalter (1003) zwei gegenüberliegende Oberflächen aufweisen, wobei eine der Oberflächen einen Leim aufweist.

7. Sperrholzbodenplatte für ein Frachttransportfahrzeug nach einem der Ansprüche 1 bis 6, **dadurch gekennzeichnet, dass** die Sperrholzbodenplatte (1001) eine Holzgrundlage und eine Beschichtung aufweist, wobei die Beschichtung gegebenenfalls phenolisches Harz aufweist.

8. Sperrholzbodenplatte für ein Frachttransportfahrzeug nach einem der Ansprüche 1 bis 7, **dadurch gekennzeichnet, dass** der Fahrgestellrahmen (1002) aneinander befestigte metallische Rahmenträger aufweist.

9. Sperrholzbodenplatte für ein Frachttransportfahrzeug nach einem der Ansprüche 1 bis 8, **dadurch gekennzeichnet, dass** die Klebstoffverbindung auf einem Kantenteil einer Oberfläche der zwei Oberflächen aufweisenden Sperrholzbodenplatte (1001) ausgebildet ist.

10. Sperrholzbodenplatte für ein Frachttransportfahrzeug nach einem der Ansprüche 1 bis 9, **dadurch gekennzeichnet, dass** die Klebstoffverbindung an einer Stelle auf einen Fahrgestellrahmen (1002) ausgebildet ist, wo der Fahrgestellrahmen (1002) zu einem Kantenteil einer Oberfläche der zwei Oberflächen aufweisenden Sperrholzbodenplatte (1001) weist; und wobei der Fahrgestellrahmen (1002) zu einem Mittelteil der einen Oberfläche der zwei Oberflächen aufweisenden Sperrholzbodenplatte (1001) weist.

11. Verfahren zum Anbringen einer Sperrholzbodenplatte für ein Frachttransportfahrzeug, aufweisend einen Fahrgestellrahmen, wobei das Verfahren umfasst
- Bereitstellen einer Sperrholzbodenplatte, aufweisend aneinander angebrachte Furniere;
- Anordnen eines Klebstoffs auf dem Fahrgestellrahmen (902);
**dadurch gekennzeichnet, dass** das Verfahren ferner umfasst
- Anordnen von elastischen Abstandhaltern auf dem Fahrgestellrahmen (901);
- Anordnen der Sperrholzbodenplatte auf den elastischen Abstandhaltern und auf dem Klebstoff zum Anbringen der Sperrholzbodenplatte an dem Fahrgestellrahmen (903).

12. Verfahren nach Anspruch 11, **dadurch gekennzeichnet, dass** das Verfahren das Anordnen von elastischen Abstandhaltern auf dem Fahrgestellrahmen (901) zumindest an Stellen umfasst, die zu Eckteilen der auf dem Fahrgestellrahmen anzuordnenden Sperrholzbodenplatte weisen.

13. Verfahren nach einem der Ansprüche 11 bis 12, **dadurch gekennzeichnet, dass** das Verfahren das Anordnen von Klebstoff (902) zwischen den elastischen Abstandhaltern auf dem Fahrgestellrahmen umfasst.

14. Verfahren nach einem der Ansprüche 11 bis 13, **dadurch gekennzeichnet, dass** das Verfahren das Anordnen der elastischen Abstandhalter (901) umfasst, die Leim auf einer Oberfläche aufweisen, so dass die Oberfläche mit dem Leim zum Fahrgestellrahmen weist, bevor Klebstoff auf den Fahrgestellrahmen (902) gegeben wird.

15. Verfahren nach einem der Ansprüche 11 bis 14, **dadurch gekennzeichnet, dass** das Verfahren das Bereitstellen einer Dicke von Klebstoff zwischen der Sperrholzbodenplatte und dem Fahrgestellrahmen entsprechend der Dicke der elastischen Abstandhalter umfasst.

16. Verfahren zum Lösen einer Sperrholzbodenplatte für ein Frachttransportfahrzeug und eines Fahrgestellrahmens für ein Frachttransportfahrzeug, wobei die Sperrholzbodenplatte aneinander angebrachte Furniere aufweist und sich eine Klebstoffverbindung zwischen der Sperrholzbodenplatte und dem Fahrgestellrahmen befindet, **dadurch gekennzeichnet, dass** die Klebstoffverbindung einen Klebstoff und elastische Abstandhalter aufweist, um die angebrachte Sperrholzbodenplatte und den Fahrgestellrahmen beabstandet voneinander zu halten, und das Verfahren des Lösens umfasst
- Anordnen von Mitteln zum Lösen in der Klebstoffverbindung zwischen der Sperrholzbodenplatte und dem Fahrgestellrahmen (10), und
- Schneiden der Klebstoffverbindung unter Verwendung von Mitteln zum Lösen (11).

17. Verfahren nach Anspruch 16, **dadurch gekennzeichnet, dass** die Mittel zum Lösen eine Schneidkante von weniger als 3 mm oder vorzugsweise weniger als 2 mm oder mehr bevorzugt weniger als 1 mm aufweisen.

## Revendications

1. Panneau de plancher en contreplaqué destiné à un véhicule de transport de marchandises comprenant un cadre de châssis, dans lequel le panneau de plancher en contreplaqué (1001) comprend des placages fixés les uns aux autres, le panneau de plancher en contreplaqué (1001) est fixé au cadre de châssis (1002) à l'aide d'un joint d'adhésif, **caractérisé en ce que** le joint d'adhésif entre le panneau de plancher en contreplaqué (1001) et le cadre de châssis (1002) comprend un adhésif (1004) et des entretoises élastiques (1003).

2. Panneau de plancher en contreplaqué destiné à un véhicule de transport de marchandises selon la revendication 1, **caractérisé en ce que** le joint d'adhésif présente une épaisseur correspondant à une épaisseur des entretoises élastiques.

3. Panneau de plancher en contreplaqué destiné à un véhicule de transport de marchandises selon l'une quelconque des revendications 1 et 2, **caractérisé en ce que** les entretoises élastiques (1003) présentent deux surfaces opposées et entre les surfaces opposées, une épaisseur de 1,5 à 5 mm, de préférence de 2 à 4 mm, de préférence encore de 2 à 3,5 mm.

4. Panneau de plancher en contreplaqué destiné à un véhicule de transport de marchandises selon l'une quelconque des revendications 1 à 3, **caractérisé en ce que** les entretoises élastiques (1003) possèdent une dureté de 60 à 80, mesurée selon la méthode Shore-A de la norme ASTM D2240 type A.

5. Panneau de plancher en contreplaqué destiné à un véhicule de transport de marchandises selon l'une quelconque des revendications 1 à 4, **caractérisé en ce que** l'adhésif (1004) comprend du polyuréthane.

6. Panneau de plancher en contreplaqué destiné à un véhicule de transport de marchandises selon l'une quelconque des revendications 1 à 5, **caractérisé en ce que** les entretoises élastiques (1003) présentent deux surfaces opposées, l'une des surfaces comportant une colle.

7. Panneau de plancher en contreplaqué destiné à un véhicule de transport de marchandises selon l'une quelconque des revendications 1 à 6, **caractérisé en ce que** le panneau de plancher en contreplaqué (1001) comprend une base en bois et un revêtement, le revêtement comprenant éventuellement une résine phénolique.

8. Panneau de plancher en contreplaqué destiné à un véhicule de transport de marchandises selon l'une quelconque des revendications 1 à 7, **caractérisé en ce que** le cadre de châssis (1002) comprend des poutres de cadre métalliques fixées les unes aux autres.

9. Panneau de plancher en contreplaqué destiné à un véhicule de transport de marchandises selon l'une quelconque des revendications 1 à 8, **caractérisé en ce que** le joint d'adhésif est formé sur une partie de bord d'une surface du panneau de plancher en contreplaqué (1001) présentant deux surfaces.

10. Panneau de plancher en contreplaqué destiné à un véhicule de transport de marchandises selon l'une quelconque des revendications 1 à 9, **caractérisé en ce que** le joint d'adhésif est formé sur un cadre de châssis (1002) à un emplacement où le cadre de châssis (1002) fait face à une partie de bord d'une surface du panneau de plancher en contreplaqué (1001) présentant deux surfaces ; et dans lequel le cadre de châssis (1002) fait face à une partie médiane de ladite surface du panneau de plancher en contreplaqué (1001) présentant deux surfaces.

11. Procédé pour fixer un panneau de plancher en contreplaqué destiné à un véhicule de transport de marchandises comprenant un cadre de châssis, le procédé comprenant les étapes consistant à :
- se procurer un panneau de plancher en contreplaqué comprenant des placages fixés les uns aux autres ;
- placer un adhésif sur le cadre de châssis (902) ;
**caractérisé en ce que** le procédé comprend en outre les étapes consistant à :
- placer des entretoises élastiques sur le cadre de châssis (901) ;
- placer le panneau de plancher en contreplaqué sur les entretoises élastiques et sur l'adhésif pour fixer le panneau de plancher en contreplaqué au cadre de châssis (903).

12. Procédé selon la revendication 11, **caractérisé en ce que** le procédé comprend la mise en place d'entretoises élastiques sur le cadre de châssis (901) au moins à des emplacements faisant face à des parties d'angles du panneau de plancher en contreplaqué à placer sur le cadre de châssis.

13. Procédé selon l'une quelconque des revendications 11 à 12, **caractérisé en ce que** le procédé comprend la mise en place d'un adhésif (902) entre les entretoises élastiques sur le cadre de châssis.

14. Procédé selon l'une quelconque des revendications 11 à 13, **caractérisé en ce que** le procédé comprend la mise en place des entretoises élastiques (901) comportant de la colle sur une surface, de manière que la surface pourvue de colle soit en regard du cadre de châssis, avant la mise en place d'adhésif sur le cadre de châssis (902).

15. Procédé selon l'une quelconque des revendications 11 à 14, **caractérisé en ce que** le procédé comprend le fait de prévoir une épaisseur d'adhésif entre le panneau de plancher en contreplaqué et le cadre de châssis correspondant à l'épaisseur des entretoises élastiques.

16. Procédé pour détacher un panneau de plancher en contreplaqué destiné à un véhicule de transport de marchandises et un cadre de châssis destiné à un véhicule de transport de marchandises, dans lequel le panneau de plancher en contreplaqué comprend des placages fixés les uns aux autres, et un joint d'adhésif se trouve entre le panneau de plancher en contreplaqué et le cadre de châssis, **caractérisé en ce que** le joint d'adhésif comprend un adhésif et des entretoises élastiques destinées à maintenir le panneau de plancher en contreplaqué fixé et le cadre de châssis à distance l'un de l'autre, le procédé de détachement comprenant les étapes consistant à :
- placer un moyen de détachement dans le joint d'adhésif entre le panneau de plancher en contreplaqué et le cadre de châssis (10) ; et
- découper le joint d'adhésif à l'aide du moyen de détachement (11).

17. Procédé selon la revendication 16, **caractérisé en ce que** le moyen de détachement présente un bord tranchant de moins de 3 mm ou de préférence de moins de 2 mm ou de préférence encore de moins de 1 mm.
